## Europäisches Patentamt
## European Patent Office
## Office européen des brevets

(19)

(11) **EP 1 230 726 B1**

(12) # FASCICULE DE BREVET EUROPEEN

(45) Date de publication et mention
de la délivrance du brevet:
**01.02.2006   Bulletin 2006/05**

(21) Numéro de dépôt: **00979729.1**

(22) Date de dépôt: **14.11.2000**

(51) Int Cl.:
***H02K 37/10*** *(2006.01)*

(86) Numéro de dépôt international:
**PCT/FR2000/003165**

(87) Numéro de publication internationale:
**WO 2001/037410 (25.05.2001 Gazette 2001/21)**

(54) **ACTIONNEUR DE VANNE DE CLIMATISATION D'AIR POUR VEHICULE AUTOMOBILE**

STELLANTRIEB FÜR DAS KLIMAANLAGEVENTIL EINES KRAFTFAHRZEUGS

AIR CONDITIONING VALVE ACTUATOR FOR MOTOR VEHICLE

(84) Etats contractants désignés:
**AT BE CH CY DE DK ES FI FR GB GR IE IT LI LU
MC NL PT SE TR**

(30) Priorité:   **17.11.1999   FR 9914432**

(43) Date de publication de la demande:
**14.08.2002   Bulletin 2002/33**

(73) Titulaire: **Société Industrielle de Sonceboz S.A.
2605 Sonceboz (CH)**

(72) Inventeurs:
  • **GANDEL, Pierre
    F-25660 Montfaucon (FR)**
  • **PRUDHAM, Daniel
    F-25220 Thise (FR)**
  • **DIETZ, Daniel
    CH-2605 Sonceboz (CH)**

(74) Mandataire: **Rhein, Alain
    Cabinet Bleger-Rhein
    17, rue de la Forêt
    67550 Vendenheim (FR)**

(56) Documents cités:
   **EP-A- 0 817 360          US-A- 5 780 944**

## Description

La présente invention a pour objet un actionneur de vanne de climatisation d'air pour véhicule automobile.

De manière générale une installation de climatisation d'air pour véhicule automobile comprend des vannes comportant des volets dont l'ouverture et la fermeture sont motorisées par l'intermédiaire de moteurs électriques du type pas à pas à aimant permanent, associés chacun à un réducteur.

Ces installations de climatisation d'air pour véhicule automobile, qui peuvent être du type de celles décrites dans les documents DE 4343385 et FR 2731852, présentent de nombreux inconvénients. Outre les problèmes de coûts de fabrication par rapport à la puissance utilisée et la taille des moteurs utilisés, les déplacements des volets à l'ouverture et à la fermeture, ainsi que lesdits moteurs eux-mêmes, génèrent des nuisances sonores auxquelles on peut difficilement remédier par des moyens d'insonorisation, puisque les ondes sonores sont véhiculées par les conduits d'aération.

Les bruits générés par les volets et les moteurs sont essentiellement dus aux caractéristiques desdits moteurs, ce qui va être exposé ci-après à l'appui de la description d'une configuration d'un actionneur de vanne de climatisation pour véhicule automobile, cette configuration étant celle la plus souvent utilisée.

Dans cet actionneur de vanne de climatisation, pour des raisons de simplicité et de coût de réalisation de l'électronique de commande, on réalise une commande à fréquence fixe d'environ 200 Hz. Le moteur pas à pas comporte un rotor à 6 paires de pôles qui peut donc prendre 24 positions différentes ou pas, par tour. Or, dans un moteur pas à pas, à chaque impulsion de l'alimentation, correspond une rotation élémentaire constante d'un pas, en sorte qu'un nombre déterminé d'impulsions entraîne un nombre correspondant de pas et, donc, une rotation connue du rotor. Aussi, la distance angulaire parcourue par le rotor entre 2 pas est de 15°, en sorte qu'une commande à fréquence fixe à 200 Hz conduit à une vitesse de rotor de 3000°/seconde.

Pour que cette vitesse soit exploitable, on associe au moteur un réducteur dont le train d'engrenages permet d'augmenter le couple de sortie et de diminuer l'amplitude du pas angulaire. En utilisant un réducteur d'un rapport d'environ 300, la vitesse de rotation fixe du volet de climatisation est d'environ 10°/seconde.

Ceci étant, la nécessité d'un fonctionnement dans un mode appelé « start-stop », c'est-à-dire de passer instantanément, entre deux pas successifs du moteur, dans sa phase de démarrage, de 0 à 200 Hz, implique de dimensionner le moteur de façon qu'il soit capable d'accélérer l'inertie du volet dudit volet de climatisation et l'inertie propre du rotor dans un délai proche de 5 milli-secondes, ce qui correspond à la durée d'un pas.

Or, dans un mode de fonctionnement du type « start-stop », le couple du moteur est nettement inférieur à celui du même moteur fonctionnant en mode dynamique, puisque dans ce dernier il n'y a pas nécessité d'accélérer instantanément l'inertie du rotor et celle du volet de climatisation.

En conséquence, pour atteindre en sortie du réducteur le couple requis pour le déplacement d'un volet de climatisation, dans un fonctionnement du type « start-stop », il est nécessaire de sur dimensionner le moteur.

Par ailleurs, pour une résistance de bobine gardée constante, la puissance mécanique disponible, le couple et la puissance électrique consommée augmentent de façon extrêmement rapide avec la tension d'alimentation. Or, la vanne de climatisation est développée pour remplir également sa fonction à une tension de batterie dégradée de 8 Volts, c'est-à-dire que le couple requis pour le déplacement du volet de climatisation doit pouvoir être atteint sous une tension de 8 Volts. Mais la tension d'une batterie non régulée varie de 8 à 14 Volts, en sorte que le moteur fonctionne la plupart du temps sous une tension supérieure à 8 Volts ce qui, du fait de l'augmentation de la puissance mécanique disponible, du couple et de la puissance électrique consommée, outre l'accroissement du bruit émis, est néfaste à la durée de vie de la vanne, puisque cela engendre d'une part, au niveau du réducteur un couple de blocage excessif, susceptible de détériorer la denture de celui-ci, et d'autre part, une surchauffe du bobinage du moteur.

Par ailleurs encore, dans le domaine des actionneurs de vanne de climatisation d'air, l'utilisation de moteurs pas à pas nécessite à chaque démarrage une réinitialisation obtenue par la mise en butée du volet de la vanne. En mode de fonctionnement « start-stop » à 200 Hz, les vannes émettent un bruit caractéristique lorsque le volet vient en butée, puisque le moteur pas à pas est encore à sa vitesse de synchronisme et que le rotor se met à vibrer autour de la position de butée. Le réducteur étant légèrement élastique, le moteur arrive même à stocker de l'énergie en armant ce type de ressort que constituent les engrenages, et l'on peut voir dans certaines applications le moteur repartir en arrière de quelques dizaines de pas sous l'effet de cette élasticité, lorsque le courant a été coupé dans les bobinages.

La présente invention a pour but de remédier aux divers inconvénients précités, en proposant un actionneur de vanne de climatisation d'air pour véhicule automobile qui, par rapport aux actionneurs existants tout en satisfaisant les exigences minimums requise par l'application, génère moins de bruit en fonctionnement, est d'un rendement supérieur, et est d'une taille et d'un poids inférieurs ce qui représente une économie non négligeable.

L'actionneur de vanne de climatisation d'air pour véhicule automobile met en oeuvre un moteur électrique du type pas à pas à aimant permanent capable de délivrer une puissance mécanique au moins égale à 50 mW, ainsi qu'un réducteur permettant de diminuer l'amplitude du pas angulaire et d'augmenter le couple de sortie, et il se caractérise essentiellement en ce que ledit moteur est défini par la relation suivante : $10^{E}\text{-}6 < \gamma^2/R_o < 50^{E}\text{-}6$ où

$\gamma$ est la constante de couple exprimée en Nm/At, proportionnelle au volume d'aimant et,

$R_o$ est le coefficient caractéristique du volume de cuivre et de la longueur de la spire moyenne des bobines, exprimé en Ohms/tr$^2$, $R_o = \rho.Lsp/(Scu.\sigma)$, $\rho$ étant la résistivité du cuivre, Lsp étant la longueur de la spire moyenne d'une bobine, Scu la section de cuivre d'une bobine et $\sigma$ le coefficient de remplissage d'une bobine ;

et en ce qu'il comprend des moyens de gestion d'alimentation dudit moteur permettant d'accélérer progressivement la fréquence d'alimentation des bobinages pour arriver à une fréquence de travail dudit moteur supérieure à la fréquence de démarrage « start-stop ».

Il est connu que les moteurs des actionneurs de vanne de climatisation d'air pour véhicule automobile présentent un couple dynamique donné par la formule suivante :

$$T_{th} = k \; \frac{\gamma.ni_o}{\sqrt{1+(\tau_e \omega_e)^2}} - \frac{\alpha \gamma^2}{R_o\left[1+(\tau_e \omega_e)^2\right]}$$

où

- $T_{th}$ est le couple à une vitesse donnée, exprimé en Nm
- $\tau_e$ est la constante de temps électrique exprimée en m.s
- $\omega_e$ est la pulsation électrique exprimée en rad/s
- $\alpha$ est la vitesse mécanique exprimée en rd/s
- $ni_o$ est le nombre d'Ampère tours par bobine à vitesse nulle
- K est un coefficient dont la valeur dépend du mode d'alimentation et du type de moteur, diphasé ou triphasé

Cette formule peut également s'écrire :

$$T_{th} = k \; \frac{\gamma \sqrt{Pe/R_o}}{\sqrt{1+(\tau_e \omega_e)^2}} - \frac{\alpha \gamma^2}{R_o\left[1+(\tau_e \omega_e)^2\right]}$$

où Pe représente la puissance électrique dissipée dans une phase du moteur.

On peut remarquer que chacun des deux termes de cette expression est proportionnel au facteur $\gamma^2/R_o$, lequel peut être utilisé pour définir les moteurs à aimant permanent, puisque la constante de couple $\gamma$ est proportionnelle au volume d'aimant, tandis que le coefficient $R_o$ est inversement proportionnel au volume de cuivre.

On notera que les moteurs actuellement utilisés dans les applications de climatisation d'air et dont la fréquence d'alimentation est de 200 Hz, ont un facteur $\gamma^2/R_o$ dont la valeur est voisine de $100^{E}\text{-}6$.

Aussi, pour un actionneur de vanne selon l'invention dont le facteur $\gamma^2/R_o$ du moteur est compris entre $10^{E}\text{-}6$ et $< 50^{E}\text{-}6$, atteindre une puissance mécanique au moins égale à 50mW n'est réalisable qu'avec une fréquence d'alimentation élevée, approximativement double de celle des moteurs actuellement utilisés.

Bien entendu, le rapport de réduction doit être modifié proportionnellement.

Etant donné que la constante de couple $\gamma$ est proportionnelle au volume d'aimant, et que le coefficient $R_o$ est inversement proportionnel au volume de cuivre, la diminution du facteur $\gamma^2/R_o$, conduit, pour des performances en terme de puissance mécanique identiques, à une réduction sensible du volume d'aimant et de cuivre, ce qui présente, outre une incidence sur les coûts de fabrication, une réduction de poids et une diminution des vibrations et du bruit du fait de la réduction de l'inertie du moteur.

Par ailleurs, étant donné les caractéristiques du moteur, la fréquence d'alimentation élevée ne permet pas un fonctionnement « start-stop » classique, il est donc indispensable, par l'intermédiaire des moyens de gestion, de réaliser une augmentation progressive de la fréquence d'alimentation, en partant d'une fréquence suffisamment basse pour permettre de décoller le volet

Selon une caractéristique additionnelle de l'actionneur selon l'invention, il comporte des moyens de régulation de la puissance d'alimentation du moteur.

De tels moyens de régulation permettent par exemple de maintenir la tension moyenne vue par le moteur à une valeur constante, laquelle est de préférence 8 Volts.

Selon un mode de réalisation préférentiel de l'actionneur selon l'invention, le moteur est triphasé, connecté en étoile ou en triangle, et piloté par six transistors.

Conformément à l'invention, la vitesse rotor du moteur est au moins de 5400 degrés par seconde, tandis que le rapport de réduction du réducteur est supérieur à 540.

Les avantages et caractéristiques de l'actionneur selon l'invention, ressortiront plus clairement de la description qui suit et qui se rapporte au dessin annexé, lequel en représente plusieurs modes de réalisation non limitatifs.

Dans le dessin annexé :

- la figure 1 est la représentation graphique du couple disponible du moteur d'un actionneur de vanne de climatisation d'air actuellement utilisé, lors d'un fonctionnement en mode « start-stop ».

- la figure 2 est la représentation graphique du couple dynamique et de la puissance mécanique du même moteur lors d'un fonctionnement en mode dynamique

- la figure 3 est la représentation graphique du couple dynamique et de la puissance mécanique lors d'un fonctionnement en mode dynamique, pour un moteur analogue, sous une tension d'alimentation supérieure.

- la figure 4 représente est la représentation graphique de la puissance mécanique en fonction de la constante de couple d'un moteur analogue pour différentes vitesses de rotation du rotor.

- la figure 5 est la représentation graphique de la fréquence d'alimentation en mode de fonctionnement du type « start-stop ».

- la figure 6 est la représentation graphique de la fréquence d'alimentation du moteur d'un actionneur de vanne de climatisation pour véhicules automobiles selon l'invention.

- la figure 7 représente une vue en perspective et en éclaté d'un premier mode de réalisation du moteur de l'actionneur selon l'invention.

- la figure 8 représente une vue en perspective d'un deuxième mode de réalisation du moteur du même actionneur.

- la figure 9 représente une vue en perspective et en éclaté d'un troisième mode de réalisation du moteur du même actionneur.

- la figure 10 représente le schéma du mode de commande du moteur décrit sur la figure 9.

- la figure 11 est la représentation des différentes séquences d'alimentation du même moteur.

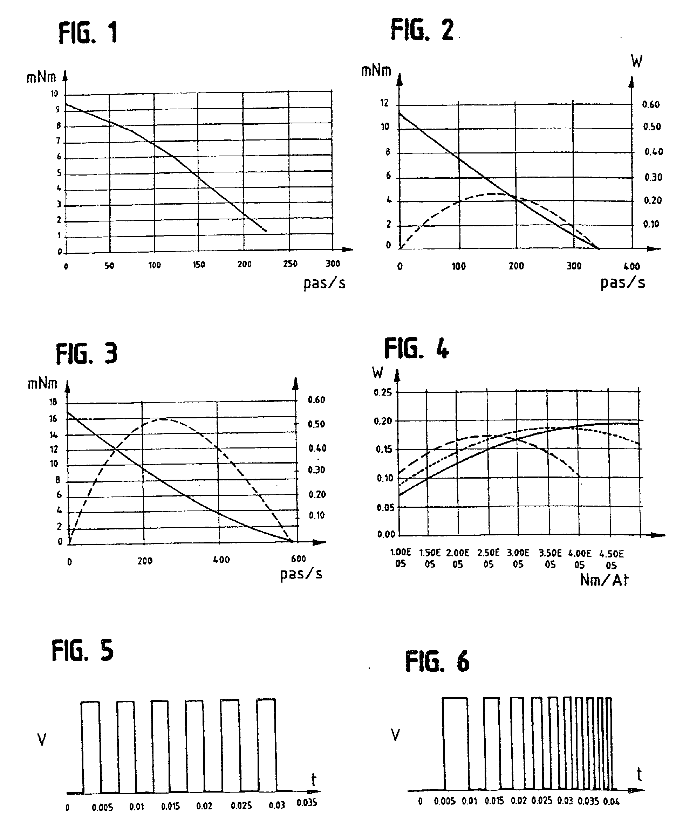

En référence à la figure 1, on peut voir l'évolution du couple disponible lors d'un passage instantané de 0 Hz à une valeur quelconque de vitesse, c'est-à-dire en mode de fonctionnement « start-stop », pour un moteur pas à pas à aimant permanent, équipant les actionneurs de vanne de climatisation pour véhicule automobile, qui en constitue un standard, et dont les caractéristiques sont : 24 pas/tour, fréquence d'alimentation 200 Hz, tension 8 Volts et résistance de bobine de 100 Ohms.

En référence à la figure 2 on peut voir, pour le même moteur, l'évolution du couple disponible pour une vitesse établie quelconque, c'est-à-dire en mode de fonctionnement dynamique.

En comparant ces deux graphiques, on s'aperçoit bien entendu qu'à 200 Hz le couple dynamique est nettement supérieur au couple « start-stop », puisqu'ils sont respectivement d'environ 2 et 4 mNm.

Un couple « start-stop » de 2 mNm donne à la sortie d'un réducteur de 1/300 ayant un rendement de 70%, un couple utile de 420 mNm sous une tension de 8 Volts, ce qui correspond au couple requis pour une vanne de climatisation à cette tension d'alimentation.

On s'aperçoit donc que ce moteur pas à pas est surdimensionné pour pouvoir fonctionner en mode « start-stop » à 200 Hz. En effet, la puissance mécanique requise par l'application climatisation est de 420 mNm x 10°/seconde, soit 50 mW, et est également représentée sur la figure 2, en trait discontinu, la puissance mécanique exprimée en Watts, pouvant être fournie par le moteur à une vitesse établie de 200 Hz, toujours pour une tension d'alimentation de 8 Volts. On peut constater qu'à 200 Hz, la puissance est de 220 mW, soit près de deux fois la puissance requise par l'application si l'on tient compte d'un rendement de 70% du réducteur.

En référence maintenant à la figure 3, on peut voir une représentation graphique analogue à celle de la figure 2, concernant un moteur identique à l'exception du fait que sa tension d'alimentation est de 14 Volts.

En comparant ces deux représentations graphiques, on peut constater que, pour une résistance de bobine gardée constante, la puissance mécanique disponible, le couple et la puissance électrique consommée augmentent rapidement avec la tension d'alimentation.

Comme cela a été exposé précédemment, le moteur est prévu pour fonctionner avec une batterie dégradée de 8 Volts, laquelle délivre toutefois en permanence une tension d'alimentation bien supérieure, en sorte que les performances en excès du moteur lorsque la tension est supérieure à 8 Volts, ne sont pas exploitées et ne sont donc pas nécessaires, de plus elles sont néfastes pour la durée de vie de la vanne et sont source de nuisances sonores supplémentaires.

En référence maintenant à la figure 4, on peut voir une représentation graphique qui montre, pour un moteur diphasé 8 Volts, la puissance mécanique en fonction de γ la constante de couple du moteur, pour différentes vitesses, donc pour différentes fréquences d'alimentation, les courbes A, B et C représentant des vitesses de, respectivement, 600, 400 et 200 pas/seconde. Il apparaît clairement sur cette représentation que plus la constante de couple γ est élevée, plus la vitesse de rotation à laquelle on obtient la puissance maximale est faible.

On peut également constater qu'il est possible d'obtenir des puissances mécaniques en sortie des moteurs très voisines avec des constantes de couple très différentes, à des vitesses de rotation différentes.

Aussi, si l'on considère que la puissance mécanique nécessaire à l'application est voisine de 50 mW, que le rendement du réducteur est proche de 0,5, et que des pertes de fer doivent être prises en compte, la puissance mécanique requise au niveau du moteur est voisine de 0,15 Watts, quelle que soit la tension d'alimentation. On peut voir que cette puissance mécanique au niveau du moteur peut être obtenue par un moteur de constante de couple de 2,5$^E$-5 Nm/At tournant à 600 pas/seconde comme par un moteur de constante de couple de 4$^E$-5 Nm/At tournant à 200 pas/seconde et qui correspond aux moteurs actuellement utilisés.

L'actionneur de vanne de climatisation d'air pour véhicule automobile selon l'invention, comporte un moteur dont la vitesse rotor est supérieure à 5400 degrés par seconde, ainsi qu'un réducteur dont le rapport de réduction est par conséquent et de préférence supérieur à 540.

De plus, par la relation :

$$T_{th} = k \ \frac{\gamma \sqrt{Pe/R_0}}{\sqrt{1 + (\tau_e \omega_c)^2}} - \frac{\alpha \gamma^2}{R_0 [1 + (\tau_e \omega_e)^2]} \quad,$$

on sait que le couple d'un moteur à une vitesse donnée est proportionnel au facteur $\gamma^2/R_o$, aussi le moteur de l'actionneur de vanne de climatisation d'air selon l'invention est défini par un facteur $\gamma^2/R_o$ compris entre :10$^E$-6 et 50$^E$-6.

Etant donné que le couple d'accélération nécessaire à accélérer l'inertie du rotor et l'inertie du volet, à une fréquence d'alimentation élevée, est supérieur au couple disponible sur un moteur d'une telle taille, en mode de fonctionnement « start-stop », il est nécessaire de définir un mode autre mode de fonctionnement.

On a représenté sur la figure 5 la fréquence d'alimentation en mode de fonctionnement du type « start-stop », qui est à comparer avec celle du mode de fonctionnement retenu, et représenté sur la figure 6.

Ce type de fonctionnement, appelé « ramping mode », permet d'implémenter une accélération progressive de la fréquence jusqu'à la fréquence requise, tout en partant d'une fréquence permettant au moteur de fournir le couple d'accélération nécessaire à accélérer l'inertie du rotor et l'inertie du volet, c'est-à-dire qu'avant accélération le mode de fonctionnement est analogue à un mode « start-stop ».

Ce mode de fonctionnement présente un autre avantage, au niveau de la réinitialisation. En effet, sur un moteur d'un actionneur de vanne selon l'invention, qui fonctionne au-dessus de vitesse « start-stop », lorsque le volet heurte la butée, le moteur perd automatiquement sa vitesse synchrone. Lors de la perte de synchronisme à haute vitesse contre la butée, le phénomène d'armement et de rebond constaté sur les actionneurs existants est très atténué, car le rotor ne peut pas repartir de façon synchrone puisque la fréquence d'excitation est supérieure à la vitesse « start-stop », et que le couple dynamique présent à l'instant du choc est moindre.

Etant donné la taille réduite du moteur utilisé dans l'actionneur selon l'invention, il convient de contrôler la puissance électrique d'entrée imposée au moteur, pour ne pas laisser évoluer la tension d'alimentation entre 8 et 14 Volts, et limiter la puissance Joule dissipée dans les bobinages du moteur.

L'actionneur selon l'invention comprend donc un moyen, de type connu, permettant de détecter la valeur de la tension d'alimentation, et à réguler, à l'aide d'une technique de hachage, le pourcentage de cette tension appliquée aux bobinages du moteur. A titre d'exemple, le rapport sera de 100% pour une tension d'alimentation de 8 Volts, et de.57% pour une tension d'alimentation de 14 V.

Cette technique de hachage permet par ailleurs de réduire le courant à l'arrêt, en effet, lorsque aucune fonction de déplacement du volet n'est requise, un facteur de marche limité, par exemple 10%, peut être appliqué afin de maintenir la vanne en position.

De plus encore, cette technique permet également pendant les phases d'accélération et de décélération, qui sont très limitées dans le temps, environ 50ms, d'appliquer un facteur de marche de 100%, et de repasser à un facteur de marche normal pendant les déplacements à vitesse constante.

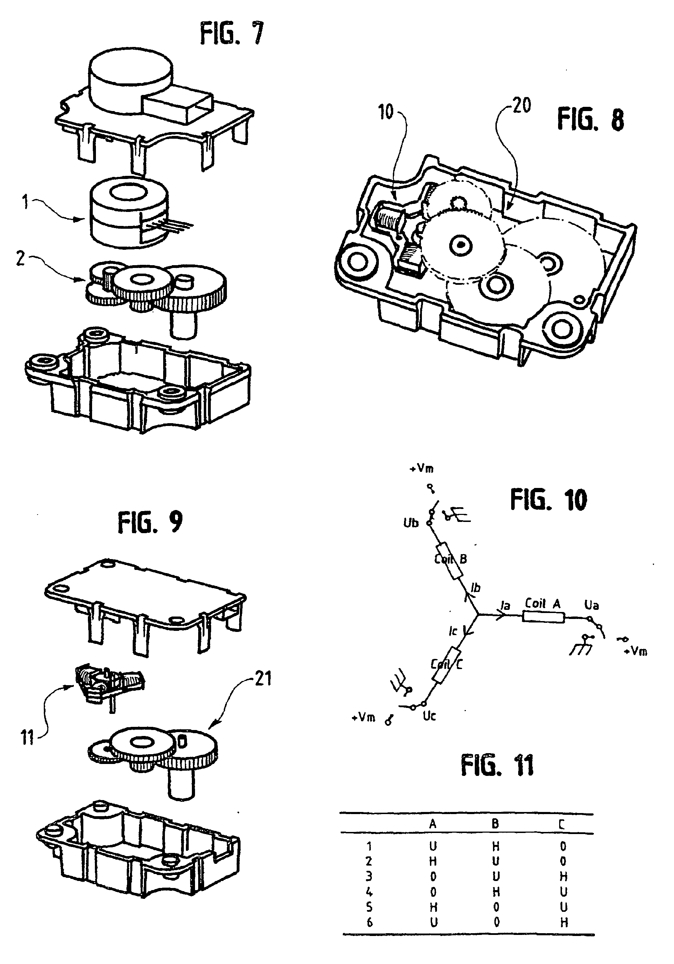

Le moteur pas à pas à aimant permanent d'un actionneur de vanne de climatisation d'air pour véhicule automobile selon l'invention peut être de différents types, dont quelques-uns sont représentés sur les figures 7, 8 et 9.

Sur la figure 7, est représenté un moteur 1 diphasé à tôle emboutie de diamètre extérieur de 20 mm, 24 pas/tour, fonctionnant à 400 Hz et couplé à un réducteur 2 dont le rapport de réduction est voisin de 600. A titre de comparaison, actuellement pour remplir la même fonction on utilise un de même type, fonctionnant à 200 Hz, mais d'un diamètre de 35 mm.

Sur la figure 8 est représenté un moteur 10 diphasé à aimant permanent, 20 pas/tour, fonctionnant à 400 Hz et couplé à un réducteur 20 dont le rapport de réduction est voisin de 720.

En référence maintenant à la figure 9, on peut voir le mode de réalisation préférentiel du moto-réducteur d'un actionneur selon l'invention. Il comporte un moteur 11 triphasé à aimant permanent 30 pas/tour, possédant 5 paires de pôles au rotor, fonctionnant à 450 Hz et couplé à un réducteur 21 dont le rapport de réduction est voisin de 540.

Le moteur triphasé permet, pour un même mode de commutation digitale des phases, deux phases alimentées, une résolution plus élevée que les moteurs représentés sur les figures 7 et 8 qui permettent respectivement des modes de résolution 24 et 20 pas par tours alors que le moteur représenté sur la figure 9 a une résolution de 30 pas entiers par tours. Le bruit et les vibrations du moteur en fonctionnement seront donc diminués.

D'autre part, le mode de commutation digital des phases du moteur triphasé peut être réalisé à l'aide de seulement six transistors, alors que pour les moteurs diphasés bipolaires (courant circulant dans la bobine d'une phase dans les deux directions) huit transistors sont nécessaires.

En référence maintenant à la figure 10, on peut voir que le mode de commande préférentiel constitue par exemple à brancher le moteur triphasé en "étoile" , en alimentant successivement par paires les phases A, B, C suivant une séquence décrite à la figure 11. Une alimentation "2 phases ON" utilisée sur un moteur triphasé permet un gain de couple de 20% par rapport au même mode de commande utilisé sur un moteur diphasé. Ceci est dû à la construction vectorielle de la somme du couple de chaque phase qui dans un moteur triphasé donne 1,732 fois le couple 1 phase ON et dans un moteur diphasé 1,414 fois le couple 1 phase ON. De plus la variation du couple entre 2 commutations de phase est plus faible dans un moteur triphasé que dans un moteur diphasé, ce qui conduira à moins de variation de vitesse du rotor en fonctionnement.

Le pilotage d'un actionneur de vanne de climatisation d'air pour véhicule automobile par un moteur triphasé apporte donc, par rapport à un moteur diphasé :

- moins de bruit et de vibrations grâce à la réduction de l'ondulation de couple et à l'augmentation de la résolution

- une commande électronique moins coûteuse

- un rendement meilleur du fait de l'augmentation du couple disponible pour une même puissance électrique d'entrée.

D'autre part, un tel moteur triphasé ne nécessite que trois fils d'alimentation, alors qu'un moteur diphasé bipolaire en nécessite quatre.

## Revendications

**1.** Actionneur de vanne de climatisation d'air pour véhicule automobile mettant en oeuvre un moteur électrique du type pas à pas à aimant permanent capable de délivrer une puissance mécanique au moins égale à 50 mW, ainsi qu'un réducteur permettant de diminuer l'amplitude du pas angulaire et d'augmenter le couple de sortie, **caractérisé en ce que** ledit moteur (1 ; 1 10 ; 11) est défini par la relation suivante : $10^E\text{-}6 < \gamma^2/R_o < 50^E\text{-}6$ où

$\gamma$ est la constante de couple exprimée en Nm/At, proportionnelle au volume d'aimant et,
$R_o$ est le coefficient caractéristique du volume de cuivre et de la longueur de la spire moyenne des bobines, exprimé en Ohms/tr², $R_o =$
$\rho.Lsp/(Scu.\sigma)$, $\rho$ étant la résistivité du cuivre Lsp étant la longueur de la spire moyenne d'une bobine, Scu la section de cuivre d'une bobine et $\sigma$ le coefficient de remplissage d'une bobine ;
et **en ce qu'**il comprend des moyens de gestion d'alimentation dudit moteur (1; 10 ; 11) permettant d'accélérer progressivement la fréquence d'alimentation des bobinages pour arriver à une fréquence de travail dudit moteur (1; 10 ; 11) supérieure à la fréquence de démarrage « start-stop ».

**2.** Actionneur selon la revendication 1, **caractérisé en ce qu'**il comporte des moyens de régulation de la puissance d'alimentation du moteur (1 ; 10 ; 11).

**3.** Actionneur selon la revendication 1 ou la revendication 2, **caractérisé en ce que** le moteur est un moteur triphasé (11), connecté en étoile ou en triangle, et piloté par six transistors.

**4.** Actionneur selon l'une quelconque des revendications précédentes, **caractérisé en ce que** la vitesse rotor du moteur (1 ; 10 ; 11) est au moins de 5400 degrés par seconde, tandis que le rapport de réduction du réducteur (2 ; 20 ; 21) est supérieur à 540.

## Claims

**1.** Actuator for an air-conditioning valve for a motor vehicle implementing an electric stepping motor with a permanent magnet capable of delivering mechanical power at least equal to 50 mW, as well as a reduction gear allowing to reduce the magnitude of the angular step and to increase the output torque, **characterised in that** said motor (1 ; 10 ; 11) is defined by the following relationship: $10^E\text{-}6 < \gamma^2 / R_o < 50^{E}\text{-}6$, where

$\gamma$ is the torque constant expressed in Nm/At, proportional to the magnet volume, and,
$R_o$ is the characteristic coefficient of the copper volume and the length of the mean winding of the coils, expressed in Ohm/tr², $R_o = \rho.Lsp/(Scu.\sigma)$, $\rho$ being the resistivity of copper, Lsp the length of the mean winding of a coil, Scu the copper cross-section of a coil and $\sigma$ the filling factor of a coil ;
and **in that** it comprises control means for the current supply to said motor (1; 10 ; 11) allowing to progressively accelerate the feeding frequency of the coilings, so as to arrive to a working frequency of said motor (1; 10 ; 11) that is higher than the "Start/Stop" starting frequency.

**2.** Actuator according to claim 1, **characterised in that** it includes means for regulating the power supply to the motor (1; 10 ; 11).

**3.** Actuator according to claim 1 or claim 2, **characterised in that** the motor is a star- or delta-connected three-phase motor (11) controlled by six transistors.

**4.** Actuator according to any of the preceding claims, **characterised in that** the rotor speed of the motor (1 ; 10 ; 11) is at least of 5400 degrees per second, while the reduction ratio of the reduction gear (2 ; 20 ; 21) is higher than 540.

## Patentansprüche

**1.** Stellantrieb für das Klimaanlageventil eines Kraftfahrzeugs, der einen elektrischen Schrittmotor der Art mit ständigem Magneten anwendet, fähig, eine mechanische Kraft zu liefern, die wenigstens 50 mW entspricht, sowie ein Untersetzungsgetriebe, erlaubend, die Amplitude des Winkelschrittes zu vermindern und das Ausgangsdrehmoment zu erhöhen, **dadurch gekennzeichnet, daß** der besagte Motor (1 ; 10 ; 11) durch das folgende Verhältnis definiert ist: $10^{E}\text{-}6 < \gamma^2 / R_o < 50^{E}\text{-}6$, wo

$\gamma$ die Konstante des Drehmomentes, ausgedrückt in Nm/At, proportional zum Magnetvolumen sei, und,

$R_o$ der charakteristische Koeffizient des Kupfervolumens und der Länge der durchschnittlichen Wicklung der Spulen, ausgedrückt in Ohm/tr$^2$, sei, $R_o = \rho.Lsp/(Scu.\sigma)$, seiend $\rho$ die Widerstandsfähigkeit des Kupfers, Lsp die Länge der durchschnittlichen Wicklung einer Spule, Scu der Kupferquerschnitt einer Spule und $\sigma$ der Füllfaktor einer Spule ;

und **dadurch**, daß er Mittel zur Steuerung der Speisung des besagten Motors (1; 10 ; 11) umfaßt, die erlauben, die Speisefrequenz der Spulen fortschreitend zu beschleunigen, um zu einer Arbeitsfrequenz des besagten Motors (1 ; 10 ; 11) zu gelangen, die größer ist als die "Start/Stopp"-Anlauffrequenz.

**2.** Stellantrieb nach Anspruch 1, **dadurch gekennzeichnet, daß** er Mittel zur Regulierung der Speisekraft des Motors (1 ; 10 ; 11) umfaßt.

**3.** Stellantrieb nach Anspruch 1 oder Anspruch 2, **dadurch gekennzeichnet, daß** der Motor ein Drehstrommotor (11) ist der in Stern- oder Dreieckschaltung angeschlossen und durch sechs Transistoren gesteuert ist.

**4.** Stellantrieb nach irgendeinem der vorgehenden Ansprüche, **dadurch gekennzeichnet, daß** die Rotorgeschwindigkeit des Motors (1 ; 10 ; 11) wenigstens 5400 Grade pro Sekunde beträgt, während das Reduzierungsverhältnis des Untersetzungsgetriebes (2 ; 20 ; 21) größer als 540 ist.

## FIG. 1

## FIG. 2

## FIG. 3

## FIG. 4

## FIG. 5

## FIG. 6

## FIG. 7

## FIG. 8

## FIG. 9

## FIG. 10

## FIG. 11

|   | A | B | C |
|---|---|---|---|
| 1 | U | H | 0 |
| 2 | H | U | 0 |
| 3 | 0 | U | H |
| 4 | 0 | H | U |
| 5 | H | 0 | U |
| 6 | U | 0 | H |